Europäisches Patentamt

European Patent Office

Office européen des brevets

(19)

(11) **EP 0 446 788 B1**

(12) **EUROPEAN PATENT SPECIFICATION**

(45) Date of publication and mention
of the grant of the patent:
**03.07.1996  Bulletin 1996/27**

(51) Int Cl.6: **G01J 5/16**

(21) Application number: **91103502.0**

(22) Date of filing: **07.03.1991**

(54) **System for temperature determination and calibration in a biomedical thermometer**

System zur Temperaturbestimmung und Kalibrierung in einem biomedizinischen Thermometer

Système pour déterminer la température et pour la calibration dans un thermomètre biomédical

(84) Designated Contracting States:
**DE GB**

(30) Priority: **12.03.1990  US 492655**

(43) Date of publication of application:
**18.09.1991  Bulletin 1991/38**

(73) Proprietor: **IVAC CORPORATION**
**San Diego, CA 92121 (US)**

(72) Inventors:
• **Goldberg, Jack**
  **San Diego, CA 92215 (US)**
• **Rosati, Robert J.**
  **Carlsbad, CA 92009 (US)**

(74) Representative: **Baillie, Iain Cameron et al**
**c/o Ladas & Parry**
**Altheimer Eck 2**
**80331 München (DE)**

(56) References cited:
**EP-A- 0 178 368       EP-A- 0 337 724**
**US-A- 4 403 296       US-A- 4 456 390**
**US-A- 4 634 294       US-A- 4 722 612**
**US-A- 4 784 149       US-A- 4 790 324**
**US-A- 4 797 840**

• **Thermometrics catalogue**

**Description**

BACKGROUND OF THE INVENTION

Field of the Invention:

This invention relates generally to biomedical thermometers, and more particularly, to improvements in infrared thermometers for measuring body temperature.

Description of Related Art:

Infrared thermometers have become useful in the medical community and permit the rapid measurement of a patient's temperature. Various approaches have been developed to make the infrared thermometer more accurate. One prior approach involves alternately sensing the radiation from an inner reference area and the target through the same optical path in order to obtain a more accurate temperature measurement. Another type of approach involves the use of a chopper unit to calibrate the thermometer. In the case of infrared thermometers which use a thermopile as the infrared detector, approaches specific to thermopile accuracy have been developed.

Typically, thermopile detectors which are used to measure infrared radiation produce an output voltage which increases as a non-linear function of the difference between the temperature of the heat sensing area in the detector and the temperature of the cold junctions of the detector. Thermopile detectors are commonly used for the measurement of extremes of temperatures, such as in detecting the temperature of a furnace, or in detecting fire. Thermopiles may also be used to measure less extreme temperatures, and European Patent Application No. 0 337 724 of Egawa et al. discloses using a thermopile detector in a clinical radiation thermometer. In the case of the application of the thermopile detector to infrared thermometry for the measurement of human body temperature, the temperature range is relatively narrow when compared to typical thermopile applications. Because of this narrow temperature range, techniques to improve accuracy of the thermopile detector have been under consideration.

It has been found that changes in the ambient temperature affect the temperature of the cold junctions which in turn can affect the accuracy of the thermopile output unless the temperature of the cold junctions is considered appropriately. One method used to improve the accuracy of patient temperature measurement with the thermopile detector is to maintain the cold junctions at a constant temperature by heating them to a predetermined temperature which is above the ambient temperature, or cooling them to a temperature below ambient. However, this method requires a heat source, power for the heat source and techniques for the precise regulation of the temperature of the heat source. A thermopile detector mounted within a housing which is heated to a selected temperature so as to maintain the cold junctions at a constant temperature is disclosed in U.S. Patent No. 4,790,324, issued to O'Hara et al.

Another method of improving the accuracy of a thermopile detector for a thermometer is by using a processor to mathematically compensate for the temperature of the cold junctions when determining the target temperature from the output voltage of the thermopile. U.S. Patent No. 4,634,294, issued to Christol et al., discloses using a processor which receives signals from an ambient temperature sensor in order to compensate for ambient temperature changes when measuring the temperature of a target using a thermopile. European Patent Application No. 0 178 368 of Malloy et al. discusses using a polynomial series for calibrating a temperature sensor in relation to the supply voltage. U.S. Patent No. 4,403,296, issued to Prosky, discusses using a polynomial function to adjust sensor data in order to more accurately represent the temperature sensed by a thermistor.

An ideal thermopile detector generates an output voltage that is related to the target's temperature and the temperature of the cold junctions by the following formula which was derived from the fundamental Stefan-Boltzmann law:

$$V_d = M \cdot (T_{BB}{}^4 - T_{CJ}{}^4)$$

where $V_d$ is the thermopile detector output voltage, $T_{BB}$ is the target temperature (in this case a blackbody), $T_{CJ}$ is the temperature of the cold junctions and $M$ is a constant.

In actual practice however, there exist many factors which alter this ideal relationship. One factor is that our knowledge of the temperature of the cold junctions, $T_{CJ}$, is typically subject to error. In most cases, a contact temperature sensor for the cold junctions is removed from the cold junctions somewhat thus making its temperature measurement inaccurate to some extent. Additionally, M is not truly constant and often depends upon the ambient temperature or the age of the detector or other factors.

A prior method for determining the blackbody target temperature $T_{BB}$ from the output signal $V_d$ of a thermopile detector and the temperature of the thermopile detector cold junctions $T_{CJ}$ was by the following equation involving a polynomial series:

$$T_{BB} = T_{CJ} + A_1 \cdot V_d + A_2 \cdot V_d{}^2 + A_3 \cdot V_d{}^3 + A_4 \cdot V_d{}^4 \cdots +$$

By manipulating the equation, it can be seen that the polynomial series in the thermopile detector output voltage equals $T_{BB} - T_{CJ}$. However, it has been observed that this voltage is actually more dependent on the $T_{CJ}$ term than this equation indicates. It has been observed that even if $T_{BB}$ changes the same amount that $T_{CJ}$ changes, in actual practice $V_d$ will not remain the same. By not accounting for this occurrence, accuracy will be adversely affected.

Thus it would be desirable to provide a method and a system for enhancing the accuracy of the output signal of a detector by considering the cold junction temperature or temperature of the reference temperature area of the detector more fully.

The tympanic membrane is generally considered by the medical community to be superior to other sites for taking a patient's temperature. The same blood source which supplies the hypothalamus, the organ which regulates the body temperature, also supplies the tympanic membrane and thus the temperature of the tympanic membrane is closely correlated to the core temperature. However, the tympanic membrane is not directly accessible; it does not lie in a straight path from the ear opening. Therefore, obtaining infrared energy from only the tympanic membrane and not from surrounding tissues, such as the ear canal, is difficult when merely inserting an instrument into the ear opening. Yet it is desirable to be able to measure a patient's temperature in this manner; quickly and non-intrusively. Whether the temperature detector is a thermopile or another type of detector, some adjustment of its output may be necessary to more accurately indicate the temperature of the tympanic membrane. Additionally, it would be desirable to determine the temperature of a particular part of a patient's anatomy, such as the core, the temperature of which may be accurately correlated with the temperature of an infrared target part of anatomy, such as the tympanic membrane, by measuring the temperature of the target and adjusting that temperature as necessary to indicate the temperature of the other part of the anatomy.

It would be desirable to provide a method and system which provide accurate temperature measurements of a patient's anatomy over a wide temperature range without requiring the application of a heat source or a cold source to the detector.

For continued accuracy of the instrument, it would also be desirable to provide a method and system allowing re-calibration of the biomedical thermometer periodically in the field. The present invention addresses these needs.

## SUMMARY OF THE INVENTION

In accordance with the invention, there is provided a thermometry apparatus (10) for providing a temperature signal representative of the temperature of a first target derived from the infrared energy received from the first target (12), the apparatus having a detector (20) with an infrared sensing area (22) for receiving the infrared radiation from the first target and having a reference temperature area (24), the detector (20) providing a steady state detector signal (26) that is a function of the temperature of the infrared sensing area (22) and of the reference temperature area (24), characterized by: sensor means (28) for sensing the temperature of the reference temperature area (24) and for providing a reference signal (30) in response to the temperature sensed, the temperature represented by the reference signal varying from the actual temperature sensed in accordance with a known characteristic of the sensor means; and processor means (36) for providing a first polynomial function of the detector signal (26) having a plurality of non-zero terms, for adjusting the reference signal in accordance with the known characteristic of the sensor means (28) and thereby providing an adjusted reference signal more closely representative of the temperature of the reference temperature area; for providing a second polynomial function of the adjusted reference signal having a plurality of non-zero terms, for multiplying one of the polynomial functions by a first gain term derived from characteristics of the first target, for combining the product of the polynomial function multiplied by the first gain term with the other polynomial function, and for providing the temperature signal based on said combination.

Also in accordance with the invention, there is provided a method for providing a temperature signal representative of the temperature of a first target derived from the infrared energy received from the first target by a detector (20) having an infrared sensing area (22) for receiving the infrared radiation from the first target and having a reference temperature area (24), the detector (20) providing a steady state detector signal (26) which is a function of the temperature of the infrared sensing area (22) and the temperature of the reference temperature area (24), the method comprising the steps of: sensing the temperature of the reference temperature area (24) and providing a reference signal (30) in response to the temperature sensed, the temperature represented by the reference signal varying from the actual temperature sensed in accordance with a known characteristic of the sensor; providing a first polynomial function of the detector signal (26) having a plurality of non-zero terms; adjusting the reference signal in accordance with the known characteristic of the sensor so as to arrive at an adjusted reference signal more closely representative of the temperature of the reference temperature area; providing a second polynomial function of the adjusted reference signal having a plurality of non-zero terms; providing a first gain term that is derived from characteristics of the first target; multiplying one of the polynomial functions by the first gain term; combining the product of the polynomial function multiplied by the first gain term with the other polynomial function; and providing the temperature signal based on said combination.

Briefly, and in general terms, the present invention provides a new and improved method and system for accurately determining the temperature of a target from infrared energy received from the target by infrared thermometry apparatus, and for calibrating the infrared thermometer. By use of calibration data, the present invention also provides a means for the thermometer to indicate the temperature of another part of the anatomy based on the infrared energy received from the target part of the anatomy.

In accordance with the invention, by way of example, an infrared detector of the thermometer receives infrared energy from the target and provides a detector signal based on both the temperature of the heat sensing portion of the infrared detector temperature and the temperature of the reference temperature area of the detector. A contact temperature measurement device provides a reference signal which is a function of the temperature of the reference temperature area of the detector. In accordance with the invention, not only is the temperature difference between the infrared sensing portion of the detector and the reference temperature area considered, but the absolute temperature of the reference temperature area is also considered. A processor receives the detector and reference signals and combines the two signals In a non-linear manner to result in a signal which is representative of the temperature of the target.

Additionally, the processor contains calibration data and combines the detector signal and the reference signal in a manner dependent upon whether the temperature of a blackbody calibration source is desired or the temperature of an anatomical target. The processor may also contain other calibration data and combines the detector signal and reference signal in a manner dependent upon whether the temperature of the target is desired or the temperature of some other part of the anatomy.

As a further feature of the Invention, means are provided for the user to re-calibrate the system with a blackbody calibration source and to modify the processor calibration data to a limited extent. This re-calibration permits compensation for changes in the instrument due to aging, usage and other reasons.

The new and improved thermometry system of the present invention is extremely accurate, reliable and easy to use in providing enhanced calibration and measurement capabilities.

These and other aspects and advantages of the invention will become apparent from the following more detailed description, when taken in conjunction with the accompanying drawings of illustrative embodiments.

BRIEF DESCRIPTION OF THE DRAWINGS

FIG. 1 is a diagram of the infrared thermometry system in accordance with the invention;
FIG. 2 is a diagram of a thermopile detector of an infrared thermometry system of FIG. 1, illustrating the heat sensing portion and cold junctions;
Fig. 3 is a block diagram of the signal processing circuitry of the infrared thermometry system of FIG. 1;
FIG. 4 is a flow chart of the factory calibration of an infrared thermometry system in accordance with the invention;
FIG. 5 is a flow chart of the field calibration of an infrared thermometry system in accordance with the invention;
FIG. 6 is a flow chart of the calibration of an infrared thermometry system to take into account anatomical characteristics; and
FIG. 7 is a flow chart of the overall calibration and temperature measurement modes of a thermometry system in accordance with the principles of the invention.

DESCRIPTION OF THE PREFERRED EMBODIMENT

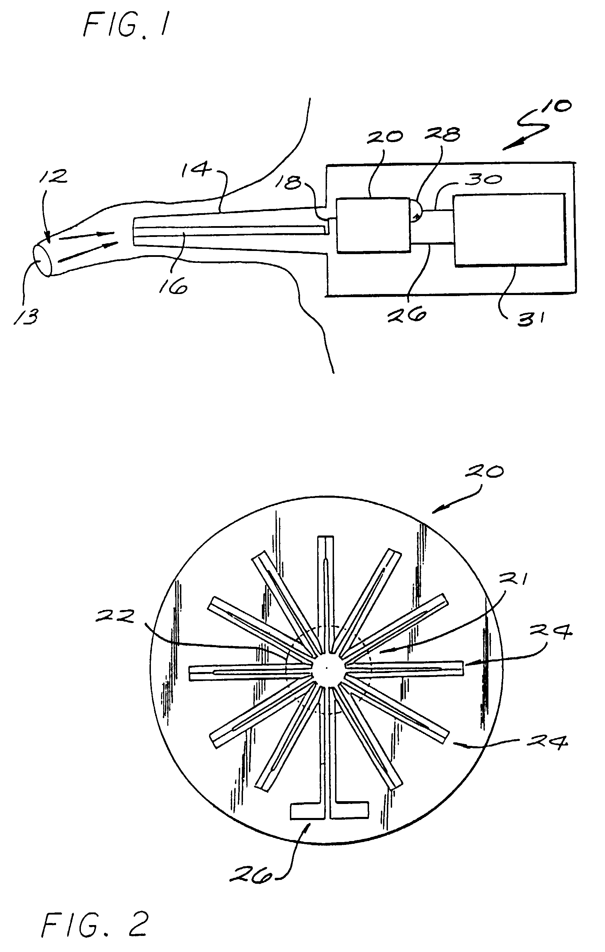

As shown in the exemplary drawings and referring with particularity to FIG. 1, the present invention is embodied in an infrared thermometry system 10 which is generally shown in the form of a hand held probe for measuring the temperature of a target area 12 such as the ear canal and tympanic membrane 13. The infrared thermometer includes a probe end 14 which is adapted to be inserted partially into the ear canal, and which covers and protects a waveguide 16 of the thermometer which receives and communicates infrared energy to the instrument.

The infrared thermometer may include an optical chopper flag 18 which operates to allow the infrared thermometer to measure the infrared radiation entering through the waveguide from the target, and to also measure a background signal level generated by the instrument itself, such as radiation and electronic offset, in order to gain a more accurate measure of the amount of infrared radiation entering the instrument. The optical chopper flag admits the incoming infrared radiation to the detector 20, typically a thermopile, which is shown schematically in greater detail in FIG. 2.

The thermopile detector includes an infrared energy sensing area 22, which typically includes a blackened area for absorption of infrared energy and hot junctions 21. The construction of a thermopile is based upon the basic construction of a thermocouple, which is generally made of dissimilar metals chosen to give a large thermoelectric output in response to a temperature differential in the thermocouple. Thus, as is shown in FIG. 2, the thermopile detector is constructed of many thermocouples joined at one end at the heat sensing area, with the opposite ends serving as cold junctions, two of which are indicated by numeral 24, in the reference temperature area. The electrical output signal is then communicated to signal processing means 31 in the infrared thermometer via the thermopile electrical signal lines 26.

The thermopile infrared detector 20 produces an output voltage which is generally a non-linear function of both the temperature of the cold junctions 24 and the temperature of the infrared energy sensing area 22 of the thermopile detector. The temperature of the cold junctions 24 of the detector 20 is preferably measured with a precision contact temperature measurement device such as a thermistor 28, which is typically disposed in intimate physical and thermal contact with the cold junction area 24 associated with the thermopile detector. The thermistor 28 generates a reference signal representative of the temperature of the cold junctions which is carried by the electrical lines 30 to the signal processing means 31.

The temperature of the cold junctions may be the ambient temperature but it may also be higher or lower than ambient temperature. In regard to a thermopile detector, the reference signal is representative of the temperature of the cold junctions. In regard to other detectors, the reference signal is representative of the temperature of the reference temperature area of the detector.

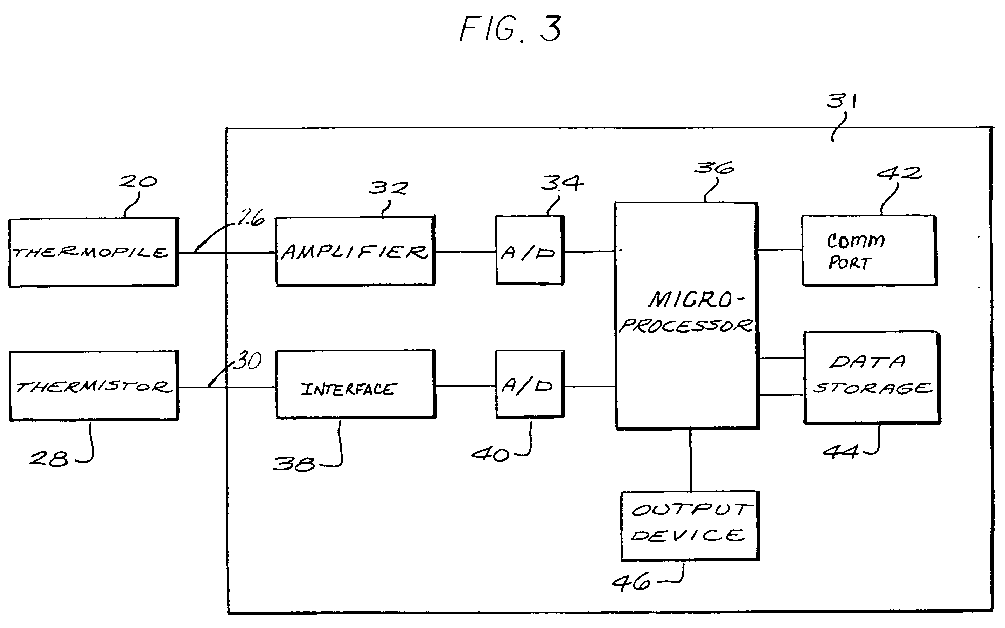

With reference to FIG. 3, the signal from the thermopile detector 20 is preferably amplified 32 and is then converted to digital form by an analog-to-digital converter 34, to be received by the microprocessor 36. The thermistor 28 is interfaced to an analog-to-digital converter 40 by interface 38. This reference signal, $V_{ref}$, which is representative of the temperature of the cold junctions $T_{CJ}$, and is ideally a known stable temperature, is also received by the microprocessor 36. The mathematical relationship between $T_{CJ}$ and $V_{ref}$, is typically supplied by the thermister manufacturer and thus $T_{CJ}$ is easily computed by the microprocessor.

The microprocessor 36 provides means to calibrate the system with a blackbody calibration source in laboratory-type conditions, it provides means to re-calibrate the system with a blackbody calibration source under other conditions and it provides means to use the system to take temperature measurements of a target or of another part of the anatomy based on the temperature of a target. To accomplish the above, calibration data is stored in the system, such as in the data storage element 44. In order to communicate externally with the microprocessor 36 and the data storage element 44, a communications port 42 is preferably provided in the infrared thermometer. Through this port 42, calibration constants may be received by the microprocessor for storage stored in the data storage element 44 which may take the form of a non-volatile memory such as an EEPROM. Additionally, the port may be used to inform the microprocessor 36 that it is now being calibrated with a blackbody calibration source of a particular temperature. As used in this description, a blackbody calibration source is defined as a standardized temperature reference source having a precisely known temperature and precisely known radiation characteristics.

Preferably, the data storage element 44 has an electrically erasable memory that can be write enabled for storage of data with sufficient precision. A typical EEPROM memory used for data storage allows storage of the data and calibration constants in the form of up to sixty-four 16-bit words. The microprocessor 36 is preferably of the type capable of performing arithmetic operations, such as are currently commercially available, and is operatively connected to an output device 46 such as a liquid crystal display (LCD) or light emitting diode (LED) display unit for example, for displaying the temperatures determined by the thermometer.

It has been found that the output voltage of a thermopile detector 20 is affected in a non-linear manner by changes in temperature of the cold junctions 24. Combining in a non-linear manner a signal which is representative of the temperature of the cold junctions over a given temperature range, or in the case of detectors other than thermopiles, a signal representative of the temperature of the reference temperature area, results in greatly improved accuracy. The non-linear combining may be expressed as a polynomial series. This has been found to significantly improve the accuracy of temperature measurements and obviates the need for heating or cooling the cold junctions in an attempt to maintain a constant temperature of the cold junctions.

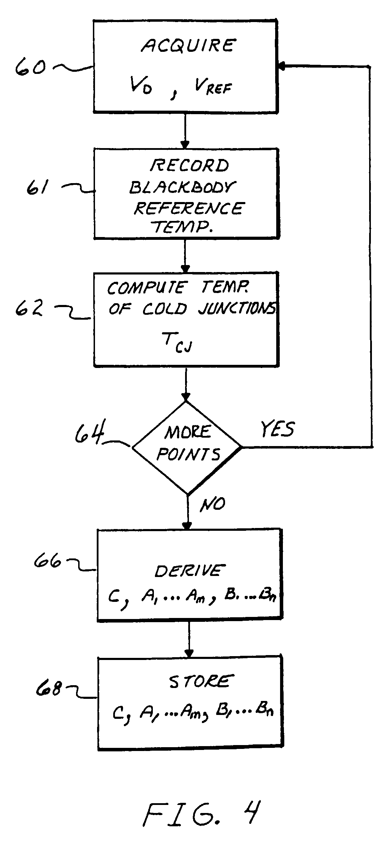

Referring now to FIG. 4, calibration of the system with a blackbody calibration source of temperature $T_{BB}$ under factory or laboratory conditions is shown. The quantity $V_d$ is the digital signal representative of the output voltage of the thermopile or, in the case of a system with an optical chopper, $V_d$ is the digital signal representative of the difference between the thermopile output voltage with the chopper open and the thermopile output voltage with the chopper closed. The detector signal $V_d$ is acquired 60 and the reference thermistor signal $V_{ref}$, representative of the temperature of the cold junctions $T_{CJ}$, is acquired 60. The temperature of the blackbody calibration source is recorded 61 and the temperature of the cold junctions $T_{CJ}$ is computed 62 based on the signal $V_{ref}$. These data may be acquired at numerous points over the specified usable target and ambient temperature ranges of the thermometer 64. Determination of the temperature of the blackbody reference source can be closely approximated with an expression utilizing the thermopile signal $V_d$ and the cold junction temperature $T_{CJ}$ as follows:

$$T_{BB1} = C + A_1 \cdot V_d + A_2 \cdot V_d^2 + A_3 \cdot V_d^3 + A_4 \cdot V_d^4 + \ldots + A_m \cdot V_d^m$$

$$+ B_1 \cdot T_{CJ} + B_2 \cdot T_{CJ}^2 + B_3 \cdot T_{CJ}^3 + \ldots B_n \cdot T_{CJ}^n$$

where C, a calibration constant, the thermopile voltage calibration coeficients $A_1 \ldots A_m$ and the cold junction temperature

calibration coefficients $B_1$ ... $B_n$ are obtained by multi-variable linear regression 66, or other means, based on data provided by the manufacturers of the thermopile detector and/or laboratory measurements of thermopile output ($V_d$) generated from testing with a blackbody calibration source over a range of target and ambient temperatures. This constant and the coefficients are stored 68 in the data storage element 44.

Laboratory testing over a range of target and ambient temperatures permits accurate determination of the constant C and coefficients $A_1 - A_m$, and $B_1 - B_n$ which will be used in measuring temperatures of targets. The actual values of this constant and these coefficients will vary with each particular detector. Also, the number of coefficients necessary will vary with each particular application. In one embodiment, the thermometer was to be used over a temperature range of about 25° C (77° F) to about 43° C (110° F) and the thermistor was to operate in the temperature range of from about 15° c (60° F) to about 43° C (110° F). Exemplary values of C = 2.4 degrees C, $A_1$ = 77.5, $A_2$ = -14.4, $A_3$ = 8.6, $A_4$ = -32.1, $B_1$ = 0.85, $B_2$ = 0.0026, and $B_3$ = -5.0 x $10^{-6}$ are illustrative. It was found that it was unnecessary to include any higher order terms in the expression for $T_{BB1}$ above in this embodiment in order to provide a sufficiently accurate fit to the collected data.

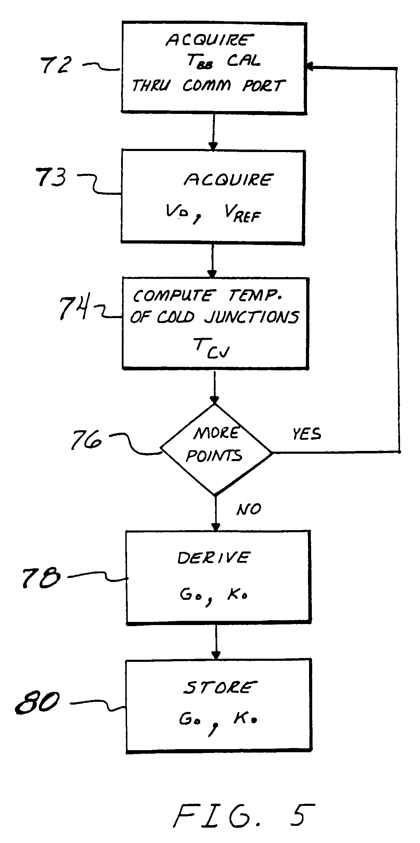

Also provided is a means to re-calibrate the thermometer in the field with a blackbody calibration source. In order to correct changes in instrument readings due to electrical component drift, such as in the amplifier which amplifies the detector output voltage before it is sent to the analog to digital converter, or to correct minor changes in the optical components of the instrument, an instrument technician will often wish to either re-calibrate the instrument or check its calibration with a blackbody source. Means are provided to switch the thermometer into the re-calibration mode and transmit to the microprocessor data necessary for recalibration. Referring now to FIG. 5, in the re-calibration mode the blackbody calibration source $T_{BB}$ temperature data is input 72 to the system through the port 42. The detector signal $V_d$ is acquired 73 and the reference thermistor signal $V_{ref}$ representative of the temperature of the cold junctions $T_{CJ}$ is acquired 73. The temperature of the cold junctions $T_{CJ}$ is computed 74. These data may be acquired at two or more points over the specified usable temperature range of the thermometer 76. The temperature calibration additive constant C, the thermopile polynomial calibration coefficients $A_1$ through $A_m$, and the cold junction temperature calibration coefficients $B_1$ through $B_n$ have already been determined in the factory or laboratory setting. In re-calibrating the thermometer, limited adjustment is provided as expressed by the following formula:

$$T_{BB} = K_0 + C +$$

$$[A_1(G_0 \cdot V_d) + A_2(G_0 \cdot V_d)^2 + A_3(G_0 \cdot V_d)^3 + A_4(G_0 \cdot V_d)^4 + ... + A_m(G_0 \cdot V_d)^m]$$

$$+ [B_1 \cdot T_{CJ} + B_2 \cdot T_{CJ}^2 + B_3 \cdot T_{CJ}^3 + ... + B_n \cdot T_{CJ}^n]$$

This formula, although very similar to the formula utilized in calibrating during a laboratory calibration sequence, includes a gain term $G_0$, and an offset term $K_0$. When the instrument is calibrated in the laboratory or the factory, the gain term $G_0$ will be arbitrarily set to 1, and the additive calibration offset term $K_0$ will be arbitrarily set to zero. When an instrument technician later regularly re-calibrates the instrument, $K_0$ and $G_0$ are determined 78 by algebraic iteration or other means, and stored in the data memory 80 to reflect any minor drifts in calibration, which may for example be due to aging of the instrument, or exposure of the infrared thermometer to shock or temperature extremes. In a preferred embodiment, the temperature of the blackbody calibration source is input through the communications port 42 and the microprocessor 36 itself will determine and store the constants $K_0$ and $G_0$. $K_0$ is typically in the range of ±2°C, and $G_0$ is typically in the range of from 0.3 to 1.5. It would also be possible for the instrument technician to independently determine the necessary corrections of these terms and to input them through the communications port 42. In a preferred embodiment, re-calibration is accomplished by acquiring data at two blackbody target temperatures approximately 25° and approximately 37° under room temperature ambient conditions. $K_0$ is determined based on data acquired at the lower of the two target temperatures and $G_0$ is calculated based on the data acquired at the higher of the two target temperatures.

In the cases of both factory calibration and field re-calibration, such procedures will preferably be accomplished without the use of a protective probe cover in order to minimize the effects of unit to unit variability in probe cover characteristics.

Blackbody calibration sources typically present somewhat different environments from that experienced with anatomical targets. Typically some adjustment of the instrument is necessary to achieve accurate results with anatomical targets. Additionally, it has been found that in order to correlate the body core temperature of a patient with the temperature measured in the ear, further adjustment is necessary, as well as for the presence of the probe cover. Although during normal instrument calibration the probe cover will not be in place, the probe cover, which may have characteristics which will vary slightly from probe cover to probe cover, will necessarily be in place during measurement of patient temperature. Physiological conditions which may vary from patient to patient are also a factor. Three additional terms have therefore been found useful in determination of the body core temperature $T_C$, which can be computed as follows:

$$T_C = K_0 + C + K_1 +$$

$$G_1[A_1(G_0 \cdot V_d) + A_2(G_0 \cdot V_d)^2 + A_3(G_0 \cdot V_d)^3 + A_4(G_0 \cdot V_d)^4 + \ldots + A_m(G_0 \cdot V_d)^m]$$

$$+ G_2[B_1 \cdot T_{CJ} + B_2 \cdot T_{CJ}^2 + B_3 \cdot T_{CJ}^3 + \ldots + Bn \cdot T_{CJ}^n]$$

$K_1$ is a further additive temperature calibration offset term, and $G_1$ and $G_2$ are additional multiplier gain terms reflecting the effects of patient ear physiology and the presence of a probe cover which may be determined from clinical testing of the instruments. It is estimated that $K_1$ will typically be in the range of from 1-2°C, but should not be more than 3-4°C, and that $G_1$ and $G_2$ should be generally close, but not equal to 1.

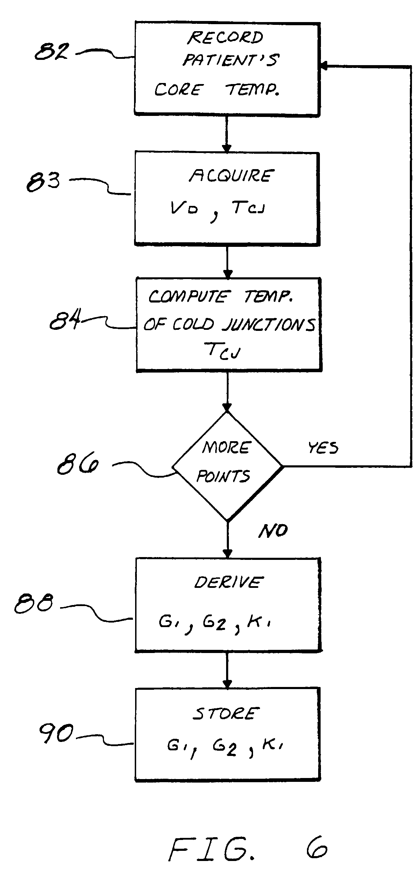

The terms $K_1$, $G_1$, and $G_2$ may be derived from actual testing of patients with pulmonary artery catheters, providing a preferred standardized measure of patient core temperature. Referring now to FIG. 6, the patient's actual temperature measured from such a catheter or other means is recorded 82. The detector signal $V_d$ and the reference signal $V_{ref}$ representative of the temperature of the cold junctions $T_{CJ}$ are acquired 83. The temperature of the cold junctions $T_{CJ}$ is computed 84. These data may be acquired at numerous points over the specified usable temperature range of the thermometer 86. The terms $K_1$, $G_1$, and $G_2$ may then be derived by multi-variable linear regression or other means. The new terms $K_1$, $G_1$, and $G_2$ are then stored 90 and are applied to temperature measurements made with the thermometry system. These additional three terms, $K_1$, $G_1$ and $G_2$ allow for increased accuracy of the instrument in determining a core temperature $T_C$.

Although in the above case the body core temperature was determined from temperature measurements of the ear, the principles may be applied to determining the temperature of other parts of the anatomy based on the temperature of targets, which may include targets other than the ear. By correlating the temperature data of the two parts of the anatomy and by setting offset and gain appropriately, such as $K_1$, $G_1$ and $G_2$, such other temperature measurements may be accomplished.

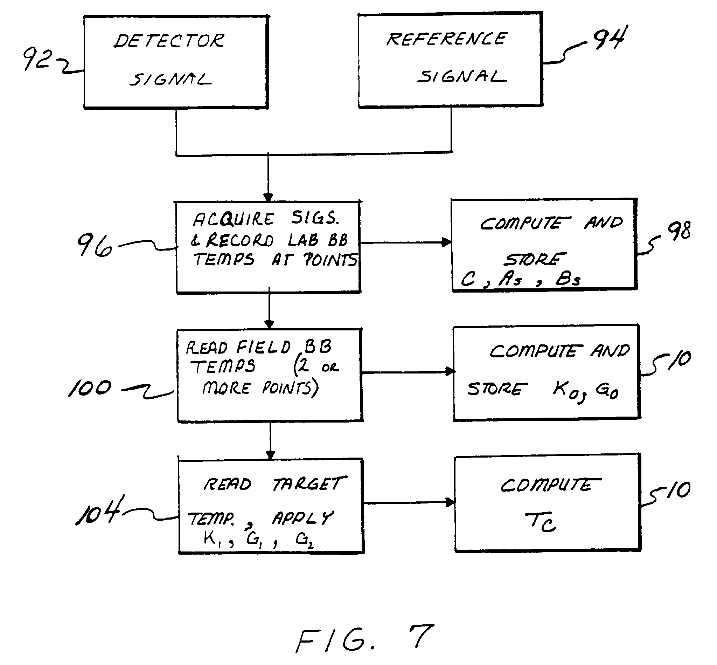

Referring now to FIG. 7, a flow chart showing the modes of an embodiment of the thermometry system is presented. The detector signal 92 and the reference signal 94 which is representative of the temperature of the reference temperature area of the detector are read 96 and the blackbody calibration source temperature data is input 96 and the constant C and the A and B coefficients are derived 98 and stored in the data storage element. In the case of field recalibration, the blackbody calibration source temperature data is input into the microprocessor 100 and the offset ($K_0$) and gain ($G_0$) are computed and stored 102. In measuring temperature of a patient, the target temperatures are read, the appropriate offset ($K_1$) and gains ($G_1$ and $G_2$) are applied 104 and the temperature computed 106.

Thus as a result of the method and system of the invention in calibrating a thermometry system and measuring the temperatures of targets, improved accuracy can be obtained in an infrared thermometer without resort to stabilizing the reference temperature area of the infrared detector such as by means of a heat or cold source. Additionally, field re-calibration is made possible with the invention.

It should be recognized that although the method and system of the invention have been described with reference to a digital signal processor, the invention may also be implemented with analog signal processing of signals from the thermopile infrared detector and cold junction temperature detector, and hardware implementation of the various additive and multiplicative gain constants, as is within the ability of those skilled in the art.

It will be apparent from the foregoing that, while particular forms of the invention have been illustrated and described, various modifications can be made without departing from the scope of the invention. Accordingly, it is not intended that the invention be limited, except as by the appended claims.

**Claims**

1. A thermometry apparatus (10) for providing a temperature signal representative of the temperature of a first target derived from the infrared energy received from the first target (12), the apparatus having a detector (20) with an infrared sensing area (22) for receiving the infrared radiation from the first target and having a reference temperature area (24), the detector (20) providing a steady state detector signal (26) that is a function of the temperature of the infrared sensing area (22) and of the reference temperature area (24), said thermometry apparatus (10) comprising:

sensor means (28) for sensing the temperature of the reference temperature area (24) and for providing a reference signal (30) in response to the temperature sensed, the temperature represented by the reference signal varying from the actual temperature in accordance with a known characteristic of the sensor means; and processor means (36) for providing a first polynomial function of the detector signal (26) having a plurality of non-zero terms, further for adjusting the reference signal in accordance with the known characteristic of the sensor means (28) and thereby providing an adjusted reference signal more closely representative of the temperature of the reference temperature area, for providing a second polynomial function of the adjusted reference signal having a plurality of non-zero terms, for multiplying one of the polynomial functions by a first gain term derived from characteristics of the first target, for combining the product of the polynomial function multiplied by the first gain term with the other polynomial function, and for providing the temperature signal based on said combination.

2. The thermometry apparatus (10) as recited in Claim 1, further characterized by:

data storage means (44) for storing a first offset term, the first gain term, and a second gain term, which is also derived from characteristics of the first target;
wherein before combining the first polynomial with the second polynomial, the processor means (31) multiplies the entire first polynomial function by the first gain term and multiplies the entire second polynomial function by the second gain term and after combining the products, adds the first offset term to the combination.

3. The thermometry apparatus (10) as recited in Claim 1, further characterized in that the data storage means (44) is also for storing a second offset term and a third gain term which are derived from recalibrating the thermometry system and the processor means (36) is also for applying the second offset and third gain terms to the combining of the detector (26) and reference signals (30).

4. The thermometry apparatus (10) as recited in Claim 2 or 3, further characterized in that the thermometry apparatus (10) is also for determining the temperature of a second target based on the temperature of the first target, the second target having a known relationship to the temperature of the first target, the second target being located at a position removed from the first target, and wherein the first offset term and first and second gain terms are derived from differences between the first target and the second target.

5. The thermometry apparatus (10) as recited in any one of the preceding claims, further characterized by communication means (42) for use in recalibrating the thermometer system with a reference source of known temperature, the communication means (42) being arranged to receive the known temperature of the reference source wherein said processor means (36) determines a calibration constant from a comparison of the known temperature of the reference source (30) and the temperature of the reference source (30) as provided by the thermometry apparatus and applies said calibration constant in providing the temperature signal.

6. The thermometry apparatus as recited in Claim 4 or 5, further characterized in that the first target comprises the ear and the second target comprises the core temperature.

7. A method for providing a temperature signal representative of the temperature of a first target derived from the infrared energy received from the first target by a detector (20) having an infrared sensing area (22) for receiving the infrared radiation from the first target and having a reference temperature area (24), the detector (20) providing a steady state detector signal (26) which is a function of the temperature of the infrared sensing area (22) and the temperature of the reference temperature area (24), the method comprising the steps of:

sensing the temperature of the reference temperature area (24) and providing a reference signal (30) in response to the temperature sensed, the temperature represented by the reference signal varying from the actual temperature in accordance with a known characteristic of the sensor;
providing a first polynomial function of the detector signal (26) having a plurality of non-zero terms;
adjusting the reference signal in accordance with the known characteristic of the sensor so as to arrive at an adjusted reference signal more closely representative of the temperature of the reference temperature area;
providing a second polynomial function of the adjusted reference signal having a plurality of non-zero terms;
providing a first gain term that is derived from characteristics of the first target;
multiplying one of the polynomial functions by the first gain term;
combining the product of the polynomial function multiplied by the first gain term with the other polynomial function; and
providing the temperature signal based on said combination.

8. The method as recited in Claim 7, further characterized by the steps of:

deriving a first offset term and second gain term from characteristics of the first target;

storing such first offset and first and second gain terms;
applying the first gain term to the entire first polynomial function;
applying the second gain term to the entire second polynomial function; and
applying the first offset term to the combined first and second polynomials.

9. The method as recited in Claim 7 or 8, further characterized in that the step of storing further comprises:

deriving a second offset term and a third gain term from re-calibrating the thermometry system with at least one reference source having a known temperature;
storing the second offset and third gain terms; and
applying the third gain term to each term of the first polynomial function and for applying the second offset term to the combination, further comprising the step of receiving the known temperature of the at least one reference source, computing the second offset and third gain terms from the differences between the known temperature of the at least one reference source and the temperature signal.

10. The method as recited in Claim 7, 8, or 9, further characterized in that the method is also for determining the temperature of a second target based on the temperature of the first target, the second target having a known relationship to the temperature of the first target, the second target being located at a position removed from the first target, and wherein the step of deriving the first offset and first gain terms comprises deriving said terms from differences between the first target and the second target.

11. The method as recited in Claim 10, further characterized in that the first target comprises the ear and the second target comprises the core temperature.

**Patentansprüche**

1. Temperaturmeßvorrichtung (10), die ein Temperatursignal absetzt, welches die Temperatur eines ersten Target angibt, die aus der von dem ersten Target (12) empfangenen Infrarotenergie hergeleitet wurde, wobei die Vorrichtung einen Detektor (20) mit einem Infraroterfassungsbereich (22) aufweist, der die Infrarotstrahlung von dem ersten Target empfängt und einen Referenztemperaturbereich (24) besitzt, wobei der Detektor (20) ein statisches Detektorsignal (26) absetzt, das eine Funktion der Temperatur des Infraroterfassungsbereichs (22) und des Referenztemperaturbereichs (24) ist, wobei die Temperaturmeßvorrichtung (10) folgendes umfaßt:

eine Sensoreinrichtung (28), welche die Temperatur des Referenztemperaturbereichs (24) erfaßt und ein Referenzsignal (30) entsprechend der erfaßten Temperatur absetzt, wobei die durch das Referenzsignal dargestellte Temperatur von der tatsächlichen Temperatur gemäß einer bekannten Charakteristik der Sensoreinrichtung abweicht; und

eine Prozessoreinrichtung (36), welche eine erste Polynomfunktion des Detektorsignals (26) mit einer Vielzahl von Gliedern ungleich Null erzeugt, des weiteren das Referenzsignal gemäß der bekannten Charakteristik der Sensoreinrichtung (28) reguliert und dadurch ein reguliertes Referenzsignal absetzt, das die Temperatur des Referenztemperaturbereichs genauer angibt, eine zweite Polynomfunktion des regulierten Referenzsignals mit einer Vielzahl von Gliedern ungleich Null erzeugt, eine der Polynomfunktionen mit einem ersten Verstärkungsglied multipliziert, das aus der Charakteristik des ersten Target hergeleitet wurde, das Produkt der mit dem ersten Verstärkungsglied multiplizierten Polynomfunktion mit der anderen Polynomfunktion kombiniert, und das Temperatursignal auf der Basis dieser Kombination absetzt.

2. Temperaturmeßvorrichtung (10) nach Anspruch 1, des weiteren gekennzeichnet durch:

eine Datenspeichereinrichtung (44), in der ein erstes Verschiebungsglied, das erste Verstärkungsglied und ein zweites Verstärkungsglied gespeichert sind, das ebenfalls aus der Charakteristik des ersten Target hergeleitet wurde;

wobei vor der Kombination des ersten Polynoms mit dem zweiten Polynom die Prozessoreinrichtung (31) die gesamte erste Polynomfunktion mit dem ersten Verstärkungsglied multipliziert und die gesamte zweite Polynomfunktion mit dem zweiten Verstärkungsglied multipliziert und nach der Kombination der Produkte das erste Verschiebungsglied zu der Kombination addiert.

**EP 0 446 788 B1**

3. Temperaturmeßvorrichtung (10) nach Anspruch 1, des weiteren dadurch gekennzeichnet, daß in der Datenspeichereinrichtung (44) auch ein zweites Verschiebungsglied und ein drittes Verstärkungsglied gespeichert werden, die aus der erneuten Kalibrierung des Temperaturmeßsystems gewonnen wurden, und daß die Prozessoreinrichtung (36) außerdem dazu dient, das zweite Verschiebungsglied und das dritte Verstärkungsglied auf die Kombination aus Detektorsignal (26) und Referenzsignal (30) anzuwenden.

4. Temperaturmeßvorrichtung (10) nach Anspruch 2 oder 3, des weiteren dadurch gekennzeichnet, daß die Temperaturmeßvorrichtung (10) außerdem dazu dient, die Temperatur eines zweiten Target auf der Basis der Temperatur des ersten Target zu ermitteln, wobei das zweite Target eine bekannte Beziehung zu der Temperatur des ersten Target besitzt, wobei das zweite Target an einer von dem ersten Target entfernten Position angeordnet ist, und wobei das erste Verschiebungsglied und das erste und das zweite Verstärkungsglied jeweils aus der Differenz zwischen dem ersten Target und dem zweiten Target hergeleitet wurden.

5. Temperaturmeßvorrichtung (10) nach einem der vorhergehenden Ansprüche, des weiteren gekennzeichnet durch eine Kommunikationseinrichtung (42) zur Verwendung bei der erneuten Kalibrierung des Temperaturmeßsystems mittels einer Referenzquelle bekannter Temperatur, wobei die Kommunikationseinrichtung (42) so angeordnet ist, daß sie die bekannte Temperatur der Referenzquelle empfängt, wobei die Prozessoreinrichtung (36) eine Kalibrierkonstante aufgrund eines Vergleichs der bekannten Temperatur der Referenzquelle (30) und der von der Temperaturmeßvorrichtung angegebenen Temperatur der Referenzquelle (30) ermittelt und die Kalibrierkonstante beim Absetzen des Temperatursignals anwendet.

6. Temperaturmeßvorrichtung nach Anspruch 4 oder 5, des weiteren dadurch gekennzeichnet, daß das erste Target die Ohrtemperatur und das zweite Target die Kerntemperatur umfaßt.

7. Verfahren zum Erzeugen eines Temperatursignals, welches die Temperatur eines ersten Target angibt, die von einem Detektor (20) mit einem Infraroterfassungsbereich (22) zum Empfang der Infrarotstrahlung von dem ersten Target und mit einem Referenztemperaturbereich (24) aus der von dem ersten Target empfangenen Infrarotenergie hergeleitet wurde, wobei der Detektor (20) ein statisches Detektorsignal (26) absetzt, das eine Funktion der Temperatur des Infraroterfassungsbereichs (22) und der Temperatur des Referenztemperaturbereichs (24) ist, wobei das Verfahren die folgenden Schritte umfaßt:

   Erfassen der Temperatur des Referenztemperaturbereichs (24) und Absetzen eines Referenzsignals (30) entsprechend der erfaßten Temperatur, wobei die durch das Referenzsignal angegebene Temperatur von der tatsächlichen Temperatur gemäß einer bekannten Charakteristik des Sensors abweicht;

   Bereitstellen einer ersten Polynomfunktion des Detektorsignals (26) mit einer Vielzahl von Gliedern ungleich Null;

   Regulieren des Referenzsignals gemäß der bekannten Charakteristik des Sensors, um zu einem regulierten Referenzsignal zu gelangen, das die Temperatur des Referenztemperaturbereichs genauer angibt;

   Bereitstellen einer zweiten Polynomfunktion des regulierten Referenzsignals mit einer Vielzahl von Gliedern ungleich Null;

   Bereitstellen eines ersten Verstärkungsgliedes, das aus der Charakteristik des ersten Target hergeleitet wurde;

   Multiplizieren von einer der Polynomfunktionen mit dem ersten Verstärkungsglied;

   Kombinieren des Produkts der mit dem ersten Verstärkungsglied multiplizierten Polynomfunktion mit der anderen Polynomfunktion; und

   Absetzen des Temperatursignals auf der Basis dieser Kombination.

8. Verfahren nach Anspruch 7, des weiteren gekennzeichnet durch die folgenden Schritte:

   Herleiten eines ersten Verschiebungsgliedes und eines zweiten Verstärkungsgliedes aus der Charakteristik des ersten Target;

Speichern dieses ersten Verschiebungsgliedes und des ersten und des zweiten Verstärkungsgliedes;

Anwenden des ersten Verstärkungsgliedes auf die gesamte erste Polynomfunktion;

Anwenden des zweiten Verstärkungsgliedes auf die gesamte zweite Polynomfunktion; und

Anwenden des ersten Verschiebungsgliedes auf die Kombination aus erstem und zweitem Polynom.

9. Verfahren nach Anspruch 7 oder 8, des weiteren dadurch gekennzeichnet, daß der Schritt des Speicherns des weiteren folgendes umfaßt:

Herleiten eines zweiten Verschiebungsgliedes und eines dritten Verstärkungsgliedes aus der erneuten Kalibrierung des Temperaturmeßsystems, wobei wenigstens eine Referenzquelle eine bekannte Temperatur besitzt;

Speichern des zweiten Verschiebungsgliedes und des dritten Verstärkungsgliedes; und

Anwenden des dritten Verstärkungsgliedes auf jedes Glied der ersten Polynomfunktion und Anwenden des zweiten Verschiebungsgliedes auf die Kombination, des weiteren umfassend den Schritt des Empfangens der bekannten Temperatur der wenigstens einen Referenzquelle, des Berechnens des zweiten Verschiebungsgliedes und des dritten Verstärkungsgliedes aus der Differenz zwischen der bekannten Temperatur der wenigstens einen Referenzquelle und dem Temperatursignal.

10. Verfahren nach Anspruch 7, 8 oder 9, des weiteren dadurch gekennzeichnet, daß das Verfahren auch dazu dient, die Temperatur eines zweiten Target auf der Basis der Temperatur des ersten Target zu ermitteln, wobei das zweite Target eine bekannte Beziehung zu der Temperatur des ersten Target besitzt, wobei das zweite Target an einer von dem ersten Target entfernten Position angeordnet ist, und wobei der Schritt des Herleitens des ersten Verschiebungsgliedes und des ersten Verstärkungsgliedes das Herleiten dieser Glieder aus der Differenz zwischen dem ersten Target und dem zweiten Target umfaßt.

11. Verfahren nach Anspruch 10, des weiteren dadurch gekennzeichnet, daß das erste Target die Ohrtemperatur und das zweite Target die Kerntemperatur umfaßt.

**Revendications**

1. Dispositif de thermométrie (10) destiné à délivrer un signal de température représentatif de la température d'une première cible dérivé de l'énergie infrarouge reçue à partir de la première cible (12), le dispositif ayant un détecteur (20) avec une zone de détection d'infrarouge (22) destinée à recevoir le rayonnement infrarouge de la première cible et ayant une zone de température de référence (24), le détecteur (20) délivrant un signal de détecteur (26) d'état permanent qui est une fonction de la température de la zone de détection d'infrarouge (22) et de la zone de température de référence (24), ledit dispositif de thermométrie (10) comprenant :

des moyens formant détecteur (28) destinés à détecter la température de la zone de température de référence (24) et destinés à délivrer un signal de référence (30) en fonction de la température détectée, la température représentée par le signal de référence variant de la température réelle en fonction d'une caractéristique connue des moyens formant détecteur ; et
des moyens formant processeur (36) destinés à fournir une première fonction polynôme du signal de détecteur (26) ayant une pluralité de termes non zéro, en outre à régler le signal de référence en fonction de la caractéristique connue des moyens formant détecteur (28) et délivrant ainsi un signal de référence réglé plus représentatif de la température de la zone de température de référence, destinés à fournir une deuxième fonction polynôme du signal de référence réglé ayant une pluralité de termes non zéro, pour multiplier l'une des fonctions polynômes par un premier terme de gain dérivé des caractéristiques de la première cible, pour combiner le produit de la fonction polynôme multipliée par le premier terme de gain avec l'autre fonction polynôme, et pour délivrer le signal de température basé sur ladite combinaison.

2. Dispositif de thermométrie (10) selon la revendication 1, caractérisé en outre par :

des moyens de stockage de données (44) destinés à stocker un premier terme de décalage, le premier terme de gain, et un deuxième terme de gain, qui est également dérivé des caractéristiques de la première cible ; dans lequel, avant de combiner le premier polynôme avec le deuxième polynôme, les moyens formant processeur (31) multiplient la première fonction polynôme entière par le premier terme de gain et multiplient la deuxième fonction polynôme entière par le deuxième terme de gain et après combinaison des produits, ajoutent le premier terme de décalage à la combinaison.

3. Dispositif de thermométrie (10) selon la revendication 1, caractérisé en outre en ce que les moyens de stockage de données (44) sont également destinés à stocker un deuxième terme de décalage et un troisième terme de gain qui sont dérivés du ré-étalonnage du système de thermométrie, et les moyens formant processeur (36) sont également destinés à appliquer le deuxième terme de décalage et le troisième terme de gain à la combinaison du détecteur (26) et des signaux de référence (30).

4. Dispositif de thermométrie (10) selon la revendication 2 ou 3, caractérisé en outre en ce que le dispositif de thermométrie (10) est également destiné à déterminer la température d'une deuxième cible basée sur la température de la première cible, la deuxième cible ayant une relation connue à la température de la première cible, la deuxième cible étant située à une position éloignée de la première cible, et dans lequel le premier terme de décalage et les premier et deuxième termes de gain sont dérivés des différences entre la première cible et la seconde cible.

5. Dispositif de thermométrie (10) selon l'une quelconque des revendications précédentes, caractérisé en outre par des moyens de communication (42) destinés à être utilisés pour le ré-étalonnage du système de thermométrie avec une source de référence de température connue, les moyens de communication (42) étant agencés pour recevoir la température connue de la source de référence dans lequel lesdits moyens formant processeur (36) déterminent une constante d'étalonnage à partir d'une comparaison de la température connue de la source de référence (30) et de la température de la source de référence (30) comme fournie par le dispositif de thermométrie et appliquent ladite constante d'étalonnage en délivrant le signal de température.

6. Dispositif de thermométrie selon la revendication 4 ou 5, caractérisé en outre en ce que la première cible comprend l'oreille et la deuxième cible comprend la température interne.

7. Procédé destiné à délivrer un signal de température représentatif de la température d'une première cible dérivé de l'énergie infrarouge reçue depuis la première cible par un détecteur (20) ayant une zone de détection d'infrarouge (22) destinée à recevoir le rayonnement infrarouge depuis la première cible et ayant une zone de température de référence (24), le détecteur (20) délivrant un signal de détecteur d'état permanent (26) qui est une fonction de la température de la zone de détection d'infrarouge (22) et de la température de la zone de température de référence (24), le procédé comprenant les étapes consistant à :

   détecter la température de la zone de température de référence (24) et délivrer un signal de référence (30) en fonction de la température détectée, la température représentée par le signal de référence variant de la température réelle en fonction d'une caractéristique connue du détecteur ;
   fournir une première fonction polynôme du signal de détecteur (26) ayant une pluralité de termes non zéro ;
   régler le signal de référence en fonction de la caractéristique connue du détecteur afin de parvenir à un signal de référence réglé plus représentatif de la température de la zone de température de référence ;
   fournir une deuxième fonction polynôme du signal de référence réglé ayant une pluralité de termes non zéro ;
   fournir un premier terme de gain qui est dérivé des caractéristiques de la première cible ;
   multiplier l'une des fonctions polynômes par le premier terme de gain ;
   combiner le produit de la fonction polynôme multipliée par le premier terme de gain avec l'autre fonction polynôme ; et
   délivrer le signal de température basé sur ladite combinaison.

8. Procédé selon la revendication 7, caractérisé en outre par les étapes consistant à :

   dériver un premier terme de décalage et un deuxième terme de gain des caractéristiques de la première cible ;
   stocker ces premier terme de décalage et premier et deuxième termes de gain ;
   appliquer le premier terme de gain à la première fonction polynôme entière ;
   appliquer le deuxième terme de gain à la deuxième fonction polynôme entière ; et
   appliquer le premier terme de décalage aux premier et deuxième polynômes combinés.

9. Procédé selon la revendication 7 ou 8, caractérisé en outre en ce que l'étape de stockage comprend en outre les étapes consistant à :

dériver un deuxième terme de décalage et un troisième terme de gain à partir du ré-étalonnage du système de thermométrie avec au moins une source de référence ayant une température connue ;
stocker les deuxième terme décalé et troisième terme de gain ; et
appliquer le troisième terme de gain à chaque terme de la première fonction polynôme et à appliquer le deuxième terme de décalage à la combinaison, comprenant en outre l'étape consistant à recevoir la température connue d'au moins une source de référence, calculer les deuxième terme de décalage et troisième terme de gain à partir des différences entre la température connue d'au moins une source de référence et le signal de température.

10. Procédé selon la revendication 7, 8 ou 9, caractérisé en outre en ce que le procédé est également destiné à déterminer la température d'une deuxième cible basée sur la température de la première cible, la deuxième cible ayant une relation connue à la température de la première cible, la deuxième cible étant située à une position éloignée de la première cible, et dans lequel l'étape consistant à dériver les premier terme de décalage et premier terme de gain comprend la dérivation desdits termes des différences entre la première cible et la deuxième cible.

11. Procédé selon la revendication 10, caractérisé en outre en ce que la première cible comprend l'oreille et la deuxième cible comprend la température interne.

FIG. 1

FIG. 2

FIG. 3

EP 0 446 788 B1

FIG. 4

FIG. 5

82 — RECORD PATIENT'S CORE TEMP.

83 — ACQUIRE $V_0$, $T_{CJ}$

84 — COMPUTE TEMP. OF COLD JUNCTIONS $T_{CJ}$

86 — MORE POINTS

YES

NO

88 — DERIVE $G_1$, $G_2$, $K_1$

90 — STORE $G_1$, $G_2$, $K_1$

FIG. 6

92 — DETECTOR SIGNAL

94 — REFERENCE SIGNAL

96 — ACQUIRE SIGS. & RECORD LAB BB TEMPS AT POINTS

98 — COMPUTE AND STORE $C$, $A_s$, $B_s$

100 — READ FIELD BB TEMPS (2 OR MORE POINTS)

10 — COMPUTE AND STORE $K_0$, $G_0$

104 — READ TARGET TEMP., APPLY $K_1$, $G_1$, $G_2$

10 — COMPUTE $T_c$

FIG. 7